Europäisches Patentamt

(19) European Patent Office

Office européen des brevets

(11) Publication number: **0 011 487**
**B1**

(12) **EUROPEAN PATENT SPECIFICATION**

(45) Date of publication of patent specification: **21.07.82**

(51) Int. Cl.³: **G 01 F 11/32** //A47K5/12

(21) Application number: **79302578.4**

(22) Date of filing: **14.11.79**

(54) Apparatus for dispensing viscous substances such as pastes or creams.

(30) Priority: **21.11.78 GB 4533578**

(43) Date of publication of application:
**28.05.80 Bulletin 80/11**

(45) Publication of the grant of the patent:
**21.07.82 Bulletin 82/29**

(84) Designated Contracting States:
**AT BE CH DE FR GB IT LU NL SE**

(56) References cited:
**FR - A - 2 052 257**
**LU - A - 66 448**

(73) Proprietor: **STERWIN AG.**
**Zeughausgasse 9**
**CH-6300 Zug (CH)**

(72) Inventor: **Sams, Bernard**
**22, Avondale Avenue**
**London. N.12. (GB)**

(74) Representative: **Westwood, Edgar Bruce et al,**
**STEVENS, HEWLETT & PERKINS 5, Quality Court**
**Chancery Lane**
**London WC2A 1HZ (GB)**

Courier Press, Leamington Spa, England.

Apparatus for dispensing viscous substances such as pastes or creams

This invention relates to apparatus for dispensing viscous substances such as pastes or creams and in particular substances of a high viscosity such that they are not free-flowing under gravity. An apparatus for dispensing a fluid substance namely a liquid soap is disclosed in LU—A—66,448 and comprises a container for holding a quantity of substance to be dispensed, a charge dispensing pump at one end of the container, the pump comprising a cylinder, a piston reciprocable in the cylinder, a hollow piston rod, exteriorly operable means for actuating the piston rod through a dispensing stroke and a return stroke, a delivery nozzle arranged at the outer end of the piston rod, the piston being carried at the inner end of the piston rod and comprising a piston member contacting the cylinder side wall and at least one aperture provided in the piston member for passage therethrough of substance from the container into the cylinder and at least one outlet port in the piston rod which outlet port is selectively opened and closed to passage of substance from the cylinder through the hollow piston rod to the nozzle.

The above apparatus is typical of pump-type dispensing apparatus for dispensing fluid substances and depends for its operation on the substance being dispensed being sufficiently free-flowing under gravity so as to flow freely into and refill the pumping chamber after a delivery stroke. Viscous substances such as pastes or creams which are not free-flowing under gravity cannot be dispensed by apparatus of this type wherein the flow of substance under gravity is relied on to refill the pumping chamber.

The present invention solves the problem of dispensing viscous substances which are not free-flowing under gravity by means of a pump-type dispensing apparatus of the type described above. A dispensing apparatus according to the invention is characterised in that the piston further comprises a second member having a periphery spaced from the cylinder side wall, the piston member is slidably mounted on the second member for relative movement axially between a first position in which the at least one aperture is closed by the second member against passage of substance therethrough and a second position in which the said at least one aperture is open for passage of substance and the said at least one outlet port is closed, and means for closing the delivery nozzle at the conclusion of the dispensing stroke.

The contact between the relatively slidable piston member and the cylinder side wall is such that frictional drag and the inertia of the substance with which the member is in contact causes a switch over from one of the first and second positions to the other on reversal of the direction of reciprocating movement of the piston rod. During the return stroke of the piston rod following the conclusion of a dispensing stroke, a vacuum is created in the cylinder and as the piston completes its return stroke fresh substance from the container is sucked into the cylinder through the at least one aperture to refill the cylinder in readiness for the next dispensing stroke. Refilling of the cylinder does not therefore depend on flowability of the substance under gravity.

Separate inlet and outlet valves associated with the piston are not required in this construction, the function of such valves being performed by the slidable piston member movable between its first and second positions.

The invention may be carried out by the apparatus illustrated by way of example in the accompanying diagrammatic drawings, in which:—

Figure 1 is a diagrammatic longitudinal section through one form of the apparatus;

Figures 2 to 6 are enlarged sectional views of the lower end of the container and the pump at respectively different stages in the operating cycle;

Figure 7 is an enlarged perspective view of the pump piston and piston rod;

Figure 8 is a similar perspective view of a member incorporating a delivery nozzle;

Figure 9 is a plan view of the member shown in Figure 8;

Figure 10 is a diagrammatic, exploded perspective view of the apparatus, partly broken away, showing the assembly thereof;

Figure 11 is a diagrammatic longitudinal section through a preferred form of dispensing pump;

Figures 12 to 15 show the dispensing pump of Figure 11 at respectively different stages in the operating cycle.

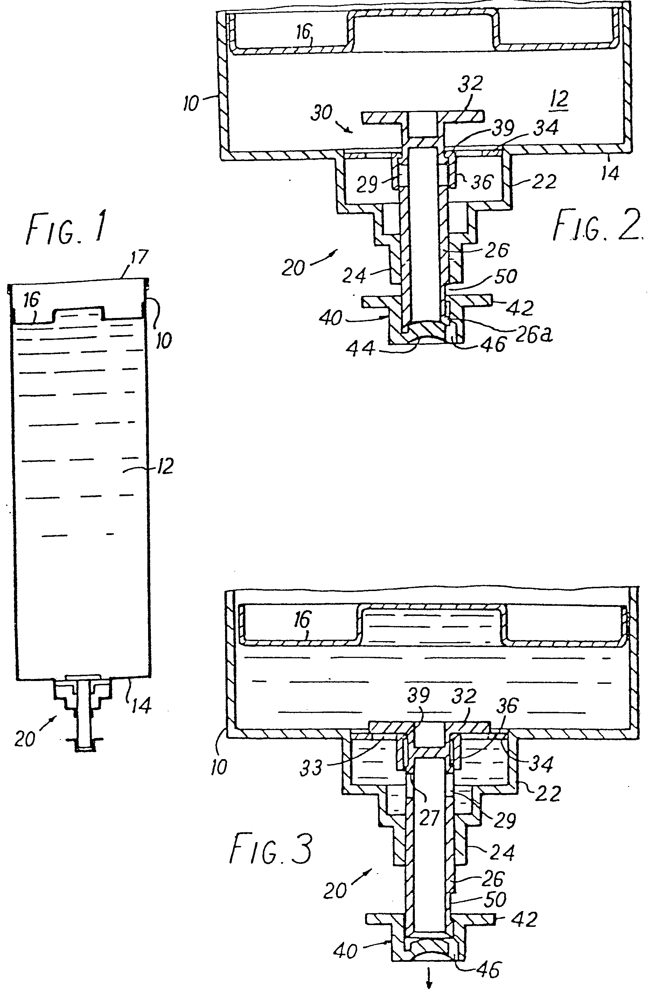

Referring to Figure 1, the apparatus shown comprises a parallel sided container 10 for holding a supply of substance 12 to be dispensed. The container 10 is arranged to be mounted in an upright position by means (not shown) to a wall or other vertical surface. The container 10 has a bottom wall 14 which incorporates a charge-dispensing pump 20. The substance 12 to be dispensed has such a viscosity that it does not flow freely under gravity and a follower 16 in the form of a free piston is provided on top of the substance in the container 10 to prevent the substance drying out. The follower 16 also scrapes substance off the wall of the container and ensures a feed of substance into the pump 20 for dispensing by preventing the creation of air voids in the container as substance is withdrawn by the pump as described below. The container is closed by a lid 17 which provides an air vent.

The charge-dispensing pump 20 comprises a cylinder 22 which in the embodiment being described is integral with the bottom wall 14 of

2

the container 10. The upper end of the cylinder 22 opens directly into the interior of the container 10 and its lower end carries a guide 24 in which a tubular piston rod 26 is axially slidably mounted. The piston rod 26 sealingly engages the guide 24 to prevent the passage of substance 12 and air between the exterior of the rod and the guide.

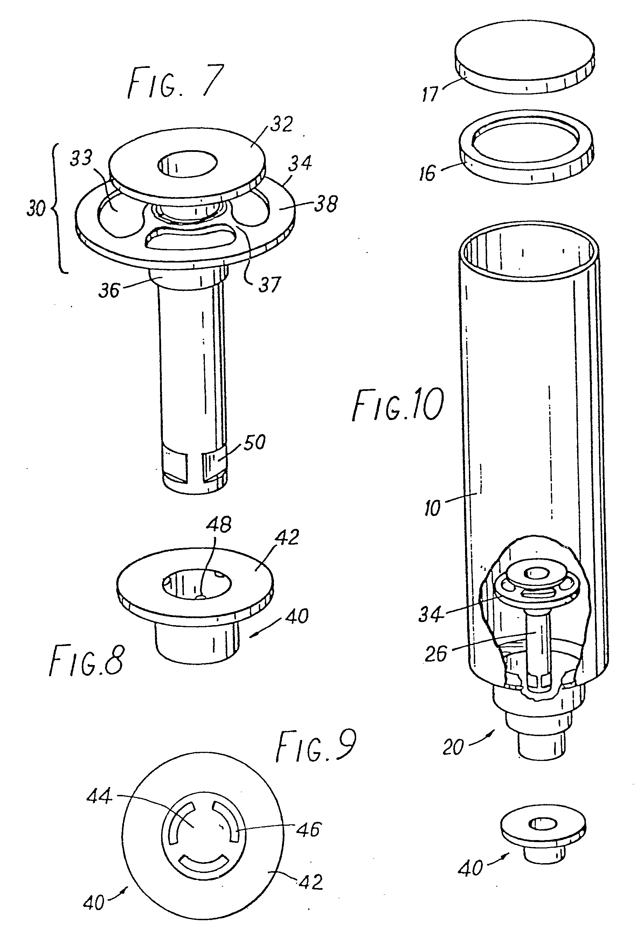

The upper end of the piston rod 26 carries a piston 30. The piston 30 comprises outer or piston member 34 and an inner or second member 32. The inner member 32 is in the form of a solid, circular piston of a diameter substantially less than that of the cylinder 22 and is integral with the piston rod 26. The outer member 34 is annular and comprises a central hub 36 connected by arms 37 to an outer rim 38, see Figure 7. The outer member 34 is slidably mounted on the inner member 32.

An annular rib 27 on the inner member 22 limits sliding movement of the outer piston member 34 in a direction away from the inner member 32 by engaging an annular rib 39 on the inside of the hub 36. Below the rib 27 the wall of the piston rod 26 is pierced by one or more outlet ports 29. The axial height of the hub 36 is such that when the rib 39 on the hub 36 is in abutting engagement with the rib 27 the hub 36 closes the ports 29. Sliding movement of the outer piston member 34 in the opposite direction is limited by engagement of the member 34 with the underside of the solid, inner member 32. The inner diameter of the rim 38 is slightly less than the diameter of the inner member 32, the spokes 37 thus defining a region of the outer member 34 which has apertures 33 to permit the substance to be pumped to pass from one side of outer member 34 to the other. Such passage of substance is prevented when the members 32 and 34 are mutually engaged.

The outer diameter of the outer piston member 34 is such that the side wall of the cylinder 22 exerts a frictional drag on the piston member for purposes to be explained.

A combined operating member and nozzle member 40 is mounted on the outer end 26*a* of the piston rod 26 for engagement with exteriorly operable means (not shown) for reciprocating the piston rod 26 in the guide 24. The member 40 comprises a flange 42 engageable with the exteriorly operable means and a bottom wall 44 having a plurality of arcuate slots 46 therein radially aligned with the wall of the piston rod 26 at the outer end 26*a*. Projections 48 are engaged in grooves 50 in the wall of the piston rod so that the member 40 is free to move axially of the piston rod by a small distance such as 3 mm.

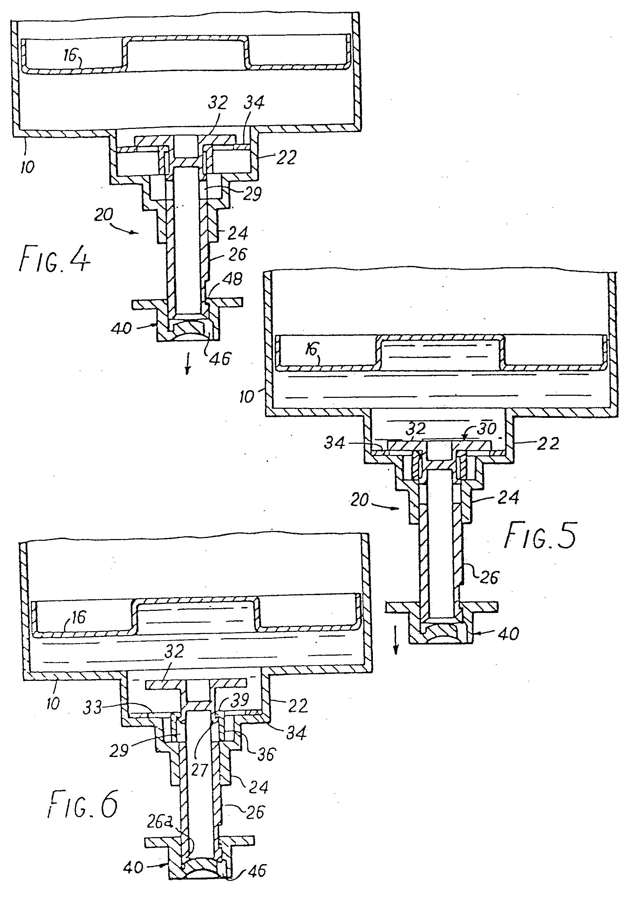

The operation of the apparatus will now be described. At the commencement of a dispensing stroke, the parts of the pump 20 have the relative positions shown in Figure 2. The member 40 is lifted so that the slots 46 are closed by the end 26*a* of the piston rod 26 thus creating a seal which prevents air from entering the pump. The exteriorly operable means engaged with the flange 42 are operated to draw the piston rod 26 downwardly. Member 40 is moved down to the bottom of the grooves 50 which break the seal and opens the slots 46. The piston rod 26 then moves down, outer member 34 initially being held stationary by friction with the wall of the cylinder and the inertia of the substance 12 filling the cylinder 22. When the inner piston member 32 engages the outer member 34 as shown in Figure 3 it closes the apertures 33 in the outer member 34 thus trapping a quantity of the substance 12 to be dispensed in the cylinder 22 beneath the piston. In this relative position of the piston members the hub 36 does not obstruct the ports 29 in the piston rod 26. Continued downwards movement of the piston rod 26 draws the piston 30 through the cylinder (both piston members 32 and 34 moving together as a unit) and expels the substance 12 from the cylinder through the ports 29 and the bore of the piston rod, see Figure 4. The substance is dispensed through the slots 46 of the nozzle member 40.

If the dispensing stroke is continued until the piston 30 bottoms in the cylinder 22, Figure 5, a maximum quantity of substance is dispensed. Means (not shown) may be provided for varying the length of the dispensing stroke for selecting the quantity of substance dispensed as will be apparent to those skilled in the art.

During the above downwards movement of the piston 30 substance 12 from within the container 10 is sucked down into the cylinder 22 above the piston. When at the conclusion of the dispensing stroke, the action of the exteriorly operable means is reversed and initially the member 40 is lifted on the piston rod 26 to close the slots 46 and reestablish the seal. Once the seal is established the piston rod 26 is returned upwardly, the rod first sliding through the outer piston member 34 which stays down until the ribs 27 and 39 engage and the hub 36 closes the ports 29, Figure 6. Air is thus prevented from entering the cylinder 22 from the exterior causing a vacuum in the cylinder, and as the piston completes its return stroke substance 12 from the container is sucked through the apertures 33 in the outer member 34, which are now uncovered, and refills the cylinder 22 beneath the piston in readiness for the next dispensing stroke, Figure 2. The cycle can be repeated as desired.

The apparatus of Figure 1 can be assembled in the very simple manner illustrated in Figure 10. First the piston member 34 is pressed onto the piston rod 26 and the assembled parts are inserted into the container 10 which is moulded to include the cylinder 22. Then the member 40 is snapped onto the end of the piston rod 26 from beneath. After filling the container, the follower 16 is inserted and the lid 17 put on.

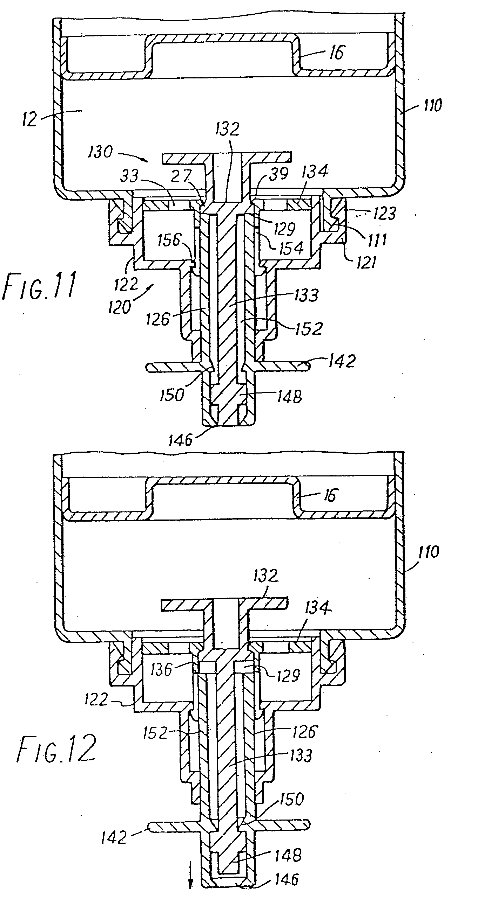

Figures 11 to 15 illustrate another embodiment of apparatus comprising a modified pump 120, the construction and operation of which is similar to that of the pump 20 so that only the differences will be pointed out in the following. Pump 120 comprises a pumping chamber or cylinder 122 having an external annular flange 121 formed with an inwardly directed rib 123 which is engaged behind an annular rib 111 formed around the mouth of a blow moulded container 110. Piston 130 comprises an inner or second member 132 having a solid head and a depending stem 133 which extends axially within the piston rod 126 and defines an annular passageway 152 therewith. Flange 142 on the piston rod 126 is engageable with the exteriorly operable means (not snown).

The inner member 132 is free to move axially of the piston rod 126 a small distance such as 3 mm. Figure 11 shows the piston rod in an upper position relative to the member 132 defined by the upper end of the piston rod contacting the underside of the head of the member 132. The lower end of the piston rod 126 is formed as a dispensing nozzle 146. In such upper position of the piston rod relative to the inner piston member 132, the stem 133 projects into the nozzle and closes it thus creating a seal which prevents air from entering the pump.

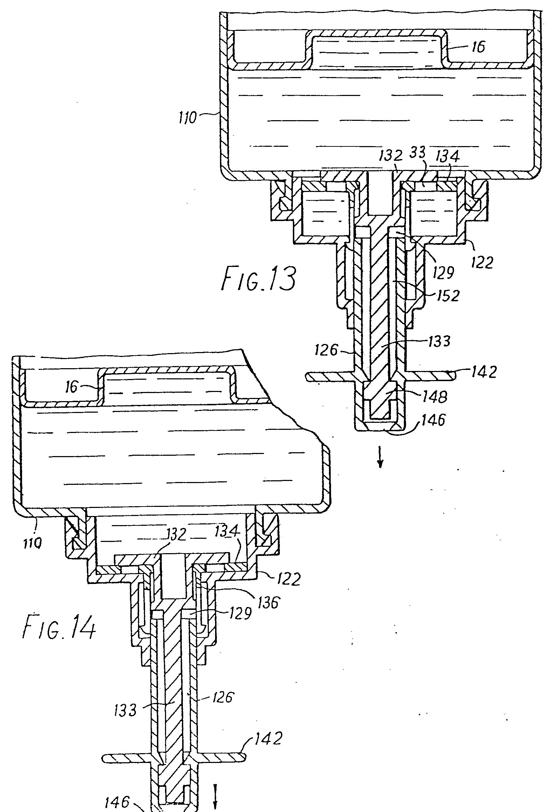

Two diametrically opposed fins 148 on the stem 133 project into the passageway 152 adjacent the nozzle 146. Shoulders 150 are provided on the inside wall of the piston rod 126 to co-operate with the fins 148 as follows. At the commencement of a delivery stroke the parts of the pump are in the position shown in Figure 11, the piston rod 126 being in its upper position. The exteriorly operable means engaged with the flange 142 are operated to draw the piston rod downwardly. The piston rod 126 moves down relative to the inner member 132 through the small distance mentioned so that nozzle 146 opens, Figure 12. Then the shoulders 150 engage the fins 146, and the piston rod 126 then entrains the inner member 132 so that parts 126—132 move downwardly as a unit during the remainder of the delivery stroke. At the time the shoulders 150 engage the fins 148, the upper end of the piston rod has moved down away from the underside of the head of the inner member 132, the annular gap thus opened up defining the outlet port 129 communicating with the passageway 152. The port 129 is closed at this moment by the hub 136 of the outer piston member 134. Outer or piston member 134 remains stationary until entrained by the inner member 132, Figure 13, as in the case of the previous embodiment, and during this time the hub 136 has moved sufficiently to open the port 129. Substance is then dispensed through nozzle 146 for the remainder of the dispensing stroke, Figure 14.

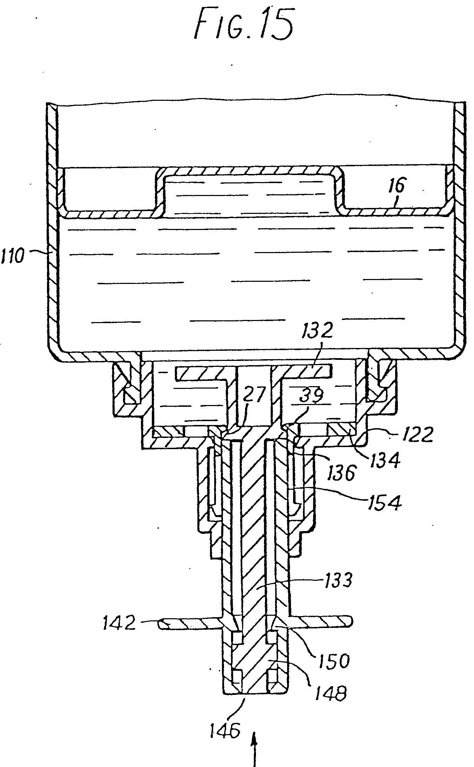

At the end of the dispensing stroke, Figure 15, the action of the exteriorly operable means is reversed. The piston rod 126 moves upwardly relative to the inner member 132 until it engages the underside of the head thereof at a position within hub 136. The outlet port 129 is thereby closed. The nozzle 146 is also closed. Thereafter the continuing upward movement of the piston rod 126 lifts the inner member 132 until the latter entrains the outer piston member 134 as shown in Figure 15, whereafter the movement continues until the parts return to the positions shown in Figure 11 and the cylinder refills in readiness for the next dispensing stroke in the manner described for the first embodiment.

The outer piston member 134 is retained in the pump by a plurality of circumferentially spaced resilient fingers 154 which depend from the hub 136 and in the upper position of the outer piston member engage a rib 156 within the chamber 122 to prevent further displacement of the piston member. It will be understood that the fingers 154 do not obstruct flow of substance into the port 129.

The presence of the follower 16 on top of the supply of substance in a rigid container 10 ensures that as substance is withdrawn from the container 10 by operation of the pump the substance in the container is drawn along towards the pump by the vacuum created during operation of the pump. The apparatus can therefore be operated in positions other than the vertical position described. If the wall of the container 10 is transparent or translucent, or includes a transparent panel, such that the position of the follower 16 can be viewed from outside the container, the follower can be used as a level indicator. The follower 16 is not required if the container 10 is collapsible and is unvented.

The entire apparatus as described may be manufactured very simply and cheaply by moulding in suitable plastics materials. Other possibilities for manufacturing the container include injection moulding, or forming the container from an extruded tube to which an end cap bearing the pump is attached.

### Claims

1. Apparatus for dispensing viscous substances such as pastes or creams, which comprises a container (10, 110) for holding a quantity of substance (12) to be dispensed, a charge dispensing pump (20, 120) at one end of the container, the pump comprising a cylinder (22, 122), a piston (30, 130) reciprocable in the cylinder, a hollow piston rod (26, 126), exteriorly operable means for actuating the piston rod through a dispensing stroke and a return stroke, a delivery nozzle (40, 146) arranged at the outer end of the piston rod, the piston (30, 130) being carried at the inner end of the piston rod and comprising a piston member (34, 134) contacting the cylinder side wall and at least one aperture (33) provided in the piston member for passage therethrough of substance from the container (10, 110) into the cylinder (22, 122) and at least one outlet port (29, 129) in the piston rod which outlet port is selectively opened and closed to passage of substance from the cylinder (22, 122) through the hollow piston rod (26, 126) to the nozzle (40, 146), characterised in that the piston (30, 130) further comprises a second member (32, 132) having a periphery spaced from the cylinder side wall, the piston member (34, 134) is slidably mounted on the second member (32, 132) for relative movement axially between a first position in which the at least one aperture (33) is closed by the second member (32, 132) against passage of substance therethrough, and a second position in which the said at least one aperture (33) is open for passage of substance and the said at least one outlet port (29, 129) is closed, and means (26a, 133) for closing the delivery nozzle (46, 146) at the conclusion of the dispensing stroke.

2. Apparatus as claimed in Claim 1, wherein the piston member (34, 134) is annular and comprises a hub (36, 136) which in the second position of the piston member closes the outlet port or ports (29, 129) in the piston rod (26, 126), and an outer rim (38) connected to the hub by spokes (37) the inner diameter of the outer rim (38) being less than the diameter of the piston member whereby the first position of the piston member (34, 134) is defined by engagement of the piston member with the underside of the second member (32, 132) such that the piston member closes the at least one aperture (33) to prevent passage of substance therethrough.

3. Apparatus as claimed in Claim 1 or Claim 2, wherein the piston member (34, 134) has an annular rib (39) which is entrained by an annular rib (27) on the second member (32, 132) in the second position.

4. Apparatus as claimed in any of Claims 1 to 3, wherein the second member (32) is integral with the piston rod and the delivery nozzle (40) comprises a member (42) engaged with the exteriorly operable means and mounted on the outer end of the piston rod (26) for limited axial movement relative thereto, said member (42) incorporating said delivery nozzle in the form of slots (46) radially aligned with the end (26a) of the piston rod (26).

5. Apparatus as claimed in any of Claims 1 to 3, wherein the second member (132) is mounted on the piston rod (126) for limited axial movement relative thereto by fins (148), the outer end of the piston rod comprises said dispensing nozzle (146), and the second member (132) has a stem (133) extending through the piston rod which projects into the nozzle (146) and closes it in the second position of the rod (126) relative to the second member (132).

6. Apparatus as claimed in Claim 5, wherein shoulders (150) formed in the piston rod (126) entrain the fins (148) in the first position of the rod (Fig. 12).

7. Apparatus as claimed in Claim 5 or 6 wherein the inner end of the piston rod (126) engages the underside of the second member (132) in the second position of the rod thus closing the outlet port (129).

8. Apparatus as claimed in any of Claims 5 to 7, wherein the piston member (134) is prevented from being displaced out of the cylinder (122) by resilient fingers (154).

9. Apparatus as claimed in any preceding claim, wherein the container (10, 110) has a rigid side wall and includes a follower (16) in the form of a free piston.

10. Apparatus as claimed in any of Claims 1 to 8, wherein the container is collapsible.

**Patentansprüche**

1. Vorrichtung zur Ausgabe viskoser Stoffe wie Pasten oder Cremes, enthaltend einen Behälter (10, 110) für die Aufnahme einer Menge des auszugebenden Stoffs (12), eine Dosierpumpe (20, 120), die an einem Ende des Behälters angeordnet ist und einen Zylinder (22, 122), einen im Zylinder beweglichen Kolben (30, 130), eine hohle Kolbenstange (26, 126), von außen betätigbare Mittel für die Bewegung der Kolbenstange während eines Förderhubs und eines Ansaughubs, eine am äußeren Ende der Kolbenstange angeordneten Auslaßdüse (40, 146) aufweist, wobei der Kolben auf dem inneren Ende der Kolbenstange angeordnet ist und ein Kolbenteil (34, 138) aufweist, das die Zylinderseitenwand berührt, sowie mindestens eine Öffnung (33) im Kolbenteil für den Durchtritt des Stoffs vom Behälter (10, 110) in den Zylinder (22, 122), und mindestens eine in der Kolbenstange befindliche Auslaßöffnung (29, 129), die abwechselnd gegenüber dem Durchtritt des Stoffs vom Zylinder (22, 122) durch die hohle Kolbenstange (26, 126) zur Auslaßdüse (40) geöffnet oder geschlossen ist, dadurch gekennzeichnet, daß der Kolben (30, 130) ein zweites Teil (32, 132) mit einen Rand aufweist, der einen Abstand von der Zylinderseitenwand aufweist, daß das Kolbenteil (34, 134) verschiebbar auf dem zweiten Teil (32, 132) gelagert ist und eine relative Axialbewegung zwischen einer ersten Stellung, in der die mindestens eine Öffnung (33) durch das zweite Teil (32, 132) für den Durchtritt des Stoffs geschlossen ist, und einer zweiten Stellung, in der die besagte mindestens eine Öffnung (33) für den Durchtritt des Stoffs geöffnet und die mindestens eine Auslaßöffnung (29, 129) geschlossen ist, zuläßt, und daß Mittel (26a, 133) für den Verschluß der Auslaßdüse (40, 146) am Ende des Förderhubs vorhanden sind.

2. Vorrichtung nach Anspruch 1, dadurch gekennzeichnet, daß das Kolbenteil (34, 134) ringförmig ausgebildet ist und eine Nabe (36, 136) besitzt, die die mindestends eine Auslaßöffnung (29, 129) in der Kolbenstange (26, 126) in der zweiten Stellung des Kolbenteils verschließt, sowie einen äußeren Rand (38), der durch Speichen (37) mit der Nabe verbunden ist, wobei der Innendurchmesser des äußeren Randes (38) kleiner ist als der Durchmesser des Kolbenteils, und daß die erste Stellung des Kolbenteils (34, 134) durch die Anlage des Kolbenteils an der Unterseite des zweiten Teils definiert ist, derart, daß das Kolbenteil die mindestens eine Öffnung (33) gegen einen Durchtritt des Stoffs verschließt.

3. Vorrichtung nach Anspruch 1 oder 2, dadurch gekennzeichnet, daß das Kolbenteil (34, 134) eine Ringschulter (39) besitzt, an der eine Ringschulter (27) am zweiten Teil (32, 132) in der zweiten Stellung anliegt.

4. Vorrichtung nach einem der Ansprüche 1 bis 3, dadurch gekennzeichnet, daß das zweite Teil (32) mit der Kolbenstange einteilig ausgebildet ist und daß die Auslaßdüse (40) ein Teil (42) aufweist, das mit einer äußeren Betätigungseinrichtung in Verbindung steht und am äußeren Ende der Kolbenstange (26) axial begrenzt relativ beweglich befestigt ist, wobei das Teil (42) die besagte Auslaßdüse in Form von Schlitzen (46) enthält, die zum Ende (26a) der Kolbenstange (26) radial ausgerichtet sind.

5. Vorrichtung nach einem der Ansprüche 1 bis 3, dadurch gekennzeichnet, daß das zweite Teil (132) axial begrenzt relativ beweglich mittels Vorsprüngen (148) an der Kolbenstange (126) gelagert ist, daß das äußere Ende der Kolbenstange die besagte Auslaßdüse (146) enthält, und daß das zweite Teil (132) einen Schaft (133) besitzt, der sich durch die Kolbenstange erstreckt und in die Austrittsdüse (146) hineinragt und diese in der zweiten Stellung der Kolbenstange (126) relativ zum zweiten Teil (13) verschließt.

6. Vorrichtung nach Anspruch 5, dadurch gekennzeichnet, daß in der Kolbenstange (126) gebildete Schultern (150) in der ersten Stellung der Kolbenstange an den Vorsprüngen (148) anliegen (Fig. 12).

7. Vorrichtung nach Anspruch 5 oder 6, dadurch gekennzeichnet, daß das innere Ende der Kolbenstange (126) in der zweiten Stellung der Kolbenstange an der Unterseite des zweiten Teils (132) anliegt und die Auslaßöffnung (129) verschließt.

8. Vorrichtung nach den Ansprüchen 5 bis 7, dadurch gekennzeichnet, daß das Kolbenteil (134) durch elastische Haken (154) gegen ein Herausgleiten aus dem Zylinder (122) gesichert ist.

9. Vorrichtung nach jedem der vorausgegangenen Ansprüche, dadurch gekennzeichnet, daß der Behälter (10, 110) eine starre Seitenwand besitzt und ein Folgestück (16) in Form eines Freikolbens umschließt.

10. Vorrichtung nach jeden der Ansprüche 1 bis 8, dadurch gekennzeichnet, daß der Behälter zusammenlegbar ist.

**Revendications**

1. Appareil distributeur de substances visqueuses telles que des pâtes ou des crèmes, qui comprend un récipient (10, 110) destiné à contenir une certaine quantité de substance (12) à délivrer, une pompe distributrice (20, 120) disposée à l'une des extrémités du récipient, cette pompe comprenant un cylindre (22, 122), un piston (30, 130) déplaçable selon un mouvement de va-et-vient dans le cylindre, une tige de piston creuse (26, 126), des moyens d'actionnement extérieurs pour déplacer la tige de piston selon une course de distribution et une course de retour, une buse de distribution (40, 146) disposée à l'extrémité extérieure de la tige de piston, le piston, (30, 130) étant porté au niveau de l'extrémité intérieure de sa tige et comprenant un élément de piston (34, 134) en contact avec la paroi latérale du cylindre et au moins une ouverture (33) ménagée dans l'élément de piston et que traverse la substance pour passer du récipient (10, 110) dans le cylindre (22, 122) et au moins un orifice de sortie (29, 129) prévu dans la tige de piston, cet orifice de sortie étant sélectivement ouvert et fermé afin que la substance provenant du cylindre (22, 122) traverse la tige de piston creuse (26, 126) pour atteindre la buse (40, 146), caractérisé en ce que la piston (30, 130) comprend en outre un second élément (32, 132) présentant une partie périphérique située à distance de la paroi latérale du cylindre, l'élément de piston (34, 134) étant monté coulissant sur la second élément (32, 132) pour être déplacé suivant un mouvement axial relatif entre une première position dans laquelle la ou les ouverture(s) (33) est (sont) fermée(s) par le second élément (32, 132) afin d'empêcher le passage de la substance à travers elle(s), et une seconde position dans laquelle la ou les ouvertures(s) (33) est (sont) ouverte(s) pour autoriser le passage de la substance et le ou les orifices(s) de sortie (29, 129) est (sont) fermé(s), des moyens (26a, 133) étant prévus pour fermer la buse de distribution (46, 146) à la fin de la course de distribution.

2. Appareil selon la revendication 1, dans lequel l'élément de piston (34, 134) est annulaire et comprend un moyen (36, 136) qui, dans la seconde position de l'élément de piston, ferme le ou les orifice(s) de sortie (29, 129) ménagé(s) dans la tige de piston et une couronne extérieure (38) reliée au moyeu par des rayons (37), le diamètre intérieur de la couronne extérieure (38) étant inférieur au diamètre de l'élément de piston, ce qui fait que la première position de l'élément de piston (34, 134) est définie par le contact de l'élément de piston avec la face inférieure du second élément (32, 132) de telle façon que l'élément de piston ferme la ou les ouvertures(s) (33) pour empêcher le passage de la substance à travers celle(s)-ci.

3. Appareil selon la revendication 1 ou 2, dans lequel l'élément de piston (34, 134) comporte un rebord annulaire (39) qui est entraîné par un rebord annulaire (27) prévu sur

**0011487**

le second élément (32, 132) dans la seconde position.

4. Appareil selon l'une quelconque des revendications 1 à 3, dans lequel le second élément (32) forme une seule pièce avec la tige de piston et la buse de distribution (40) comprend un élément (42) qui est en contact avec les moyens d'actionnement extérieurs et est monté sur l'extrémité extérieure de la tige de piston (26) de façon à pouvoir être aimé d'un mouvement axial limité par rapport à celle-ci, ledit élément (42) renfermant ladite buse de distribution qui se présente sous la forme de fentes (46) alignées axialement avec l'extrémité (26a) de la tige de piston (26).

5. Appareil selon l'une quelconque des revendications 1 à 3, dans lequel le second élément (132) est monté, par l'intermédiaire d'ailettes (148), sur la tige de piston (126) de façon à pouvoir être animé d'un mouvement axial limité par rapport à celle-ci, l'extrémite extérieure de la tige de piston comprenant ladite buse de distribution (146), tandis que le second élément (132) comporte une tige (133) qui s'étend à travers la tige de piston et s'avance dans la buse (146) pour fermer celle-ci dans la seconde position de la tige de piston (126) par rapport au second élément (132).

6. Appareil selon la revendication 5, dans lequel des épaulements (150) formés dans la tige de piston (126) entraînent les ailettes (148) dans la première position de la tige de piston (figure 12).

7. Appareil selon la revendication 5 ou 6, dans lequel l'extrémité intérieure de la tige de piston (126) vient en contact avec la face inférieure du second élément (132) dans la seconde position de la tige de piston en fermant l'orifice de la sortie (129).

8. Appareil selon l'une quelconque des revendications 5 à 7, dans lequel l'élément de piston (134) est empêché de sortir du cylindre (122) par des doigts élastiques (154).

9. Appareil selon l'une quelconque des revendications précédentes, dans lequel le récipient (10, 110) présente une paroi latérale rigide et comporte un élément suiveur (16) en forme de piston libre.

10. Appareil selon l'une quelconque des revendications 1 à 8, dans lequel le récipient est pliable.

*FIG. 1*

*FIG. 2*

*FIG. 3*

FIG.4

FIG.5

FIG.6

FIG. 7

33

30

32

34

38

36

37

50

FIG.8

48

42

40

FIG.9

44

46

40

42

40

FIG.10

17

16

10

34

26

20

40

*Fig.11*

*Fig.12*

FIG.13

FIG.14

5

FIG. 15